# EUROPEAN PATENT APPLICATION

(11) **EP 4 786 804 A1**
(43) Date of publication of application: **05.08.2026**
(21) Application number: 24871682.1
(22) Date of filing: 28.08.2024
(51) Int. Cl.: F16B 19/00, B60R 13/02, F16B 5/06

(54) **CLIP HOLDING STRUCTURE**

(30) Priority: 29.09.2023 JP 2023169884
(71) Applicant: Newfrey LLC, New Britain, CT 06053 (US)
(72) Inventor: MIZUKOSHI Suguru, Utsunomiya-shi, Tochigi 321-0905 (JP)
(74) Representative: Haarpatent Patentanwälte Krämer Meyer
(86) International application number: PCT/JP2024/030690
(87) International publication number: WO 2025/069881

(57) **Abstract**

[Problem] A clip holding structure is provided on a clip mounting seat.

[Means of Solution] A clip 10 comprises a shaft unit 12, a head unit 11, a leg unit 15 and a flange 13 comprising an engagement unit 14. The clip mounting seat 22 comprises an engagement unit 25, a mounting hole 23 and an opening unit 24. When the clip 10 is attached to the clip mounting seat 22 by inserting the clip 10 radially through the opening unit 24 into the mounting hole 23, the engagement unit 14 of the clip 10 and the engagement unit 25 of the clip mounting seat 22 engage with each other, regulating the position of the axial center of the clip 10; when the leg unit 15 is inserted into and fitted into the fitting hole 33 of the attached member 30, if the position of the axial center of the clip 10 is different from the position of the axial center of the fitting hole 33, as the leg unit 15 is guided toward the axial center of the fitting hole 33, the structure is such that the engagement between the engagement unit 14 of the clip 10 and the engagement unit 25 of the clip mounting seat 22 is released to allow the clip 10 to move so that the position of the axial center of the clip 10 approaches the position of the axial center of the fitting hole 33.

## Description

### [Technical Field]

The present invention relates to a clip holding structure. Specifically, it relates to a clip holding structure on a clip mounting seat provided on an attaching member.

### [Background Art]

Generally, when an attaching member such as a door trim is attached to an attached member such as a body panel of an automobile, attachment is performed by using a clip. Specifically, one end of a clip is attached in advance to a clip mounting seat provided on the door trim, and so forth, and in this state, the other end of the clip is pushed into a fitting hole provided on the body panel and so forth, and the clip is fitted into the fitting hole to attach the door trim and the like to the body panel, and so forth.

In this case, since the door trim and the like to be attached is large, it is necessary to use a plurality of clips for assembly. Therefore, in such case, the clip mounting seats provided on the door trim and the like are provided in a plurality of places to accommodate the plurality of clips, and the fitting holes provided on the body panel and the like are provided at a plurality of locations.

When each of the plurality of clips is attached to the corresponding clip mounting seat in advance, each of the plurality of clips must be held in the corresponding clip mounting seat so that the position of each clip does not shift due to, for example, the clip's own weight, or fall off the corresponding clip mounting seat.

In response to such requirement, as seen in Patent Document 1, a structure is provided in which a locking hole is provided in the clip mounting seat, a locking protrusion is provided in the clip, and the locking hole and the locking protrusion are engaged to hold the clip in the clip mounting seat so that the clip does not fall off the clip mounting seat.

However, on the other hand, when each of the plurality of clips is held in the corresponding clip mounting seat as described above and then each of the plurality of clips is fitted into the corresponding fitting hole, this may not occur in all combinations of clips and fitting holes; however, for example, when transporting an attaching member with a clip already attached to the clip mounting seat, the position of the axial center of the clip and the position of the axial center of the corresponding fitting hole may not match due to vibrations, etc. In combinations of clips and fitting holes where the positions of the axial centers do not match, the clip cannot be fitted into the fitting hole, and as a result, the door trim, etc. cannot be attached to the vehicle body panel, etc.

### [Prior Art Documents]

### [Patent Documents]

[Patent Document 1] Utility Model Registration No. 2559515

### [Summary of the Invention]

### [Problem to be Solved by the Invention]

In view of the above circumstances, the problem to be solved by the present invention is to provide a clip holding structure on a clip mounting seat so that the clip attached to the clip mounting seat provided on the door trim or the like does not fall off the clip mounting seat, and the door trim or the like can be easily attached to the vehicle body panel or the like.

### [Means for Solving the Problem]

The present invention was developed to solve such problems; the a clip holding structure in a clip mounting seat provided on an attaching member in one embodiment of the present invention is a clip holding structure on a clip mounting seat provided on an attaching member, wherein the clip comprises a head unit on one end side of a shaft unit, a leg unit on the other end side of the shaft unit, and a flange between the head unit and the leg unit of the shaft unit; the flange comprises an engagement unit on the face of the head unit side;
the clip mounting seat comprises an engagement unit; a mounting hole having a diameter smaller than the diameters of the head unit and the flange; and an opening unit that communicates with the mounting hole, the shaft unit between the head unit and the flange being inserted radially through the opening unit into the mounting hole so that the mounting hole is located between the head unit and the flange, and the clip being attached to the clip mounting seat; with the clip in a state in which, when the clip is attached to the clip mounting seat, the engagement unit of the clip and the engagement unit of the clip mounting seat are engaged with each other, the position of the axial center of the clip is regulated by the engagement, and the clip is attached to the clip mounting seat, when the leg unit is inserted into and fitted into the fitting hole of the attached member, if the position of the axis center of the clip is different from the position of the axis center of the fitting hole, as the leg unit is guided toward the axial center of the fitting hole, the engagement unit of the clip and the engagement unit of the clip mounting seat are released so that the clip can move so that the position of the axial center of the clip approaches the position of the axial center of the fitting hole.

In another embodiment, the structure for holding the clip on the clip mounting seat provided on the attaching member may be such that the engagement unit of the clip mounting seat is an edge of the mounting hole, and the engagement unit of the clip is a protrusion.

In another embodiment, the structure for holding the clip on the clip mounting seat provided on the attaching member may be such that the engagement unit of the clip mounting seat is a groove, and the engagement unit of the clip is a protrusion.

In another embodiment, the structure for holding the clip on the clip mounting seat provided on the attaching member may be such that the engagement unit of the clip mounting seat is a protrusion, and the engagement unit of the clip is a protrusion.

In another embodiment, the structure for holding the clip on the clip mounting seat provided on the attaching member may be such that the clip has a plurality of protrusions, and at least two of the plurality of protrusions engage with the engagement unit of the clip mounting seat.

### [Effects of the Invention]

According to the clip holding structure on the clip mounting seat of the present invention, the clip that is pre-attached to the clip mounting seat provided on the door trim, etc., does not fall off from the clip mounting seat, and door trim and the like can be easily assembled to a vehicle body panel and the like.

### [Brief Description of the Drawings]

[FIG. 1] A perspective view of a clip and a clip mounting seat according to a first embodiment of the present invention.
[FIG. 2] A perspective view of a state in which a clip is attached to a clip mounting seat according to a first embodiment of the present invention.
[FIG. 3] A cross-sectional view taken along line A-A in FIG. 2.
[FIG. 4] A cross-sectional view taken along line B-B in FIG. 2.
[FIG. 5] A cross-sectional view of a clip according to a first embodiment of the present invention when being fitted into a fitting hole of an attached member.
[FIG. 6] A cross-sectional view of a clip according to a first embodiment of the present invention when being fitted into a fitting hole of an attached member.
[FIG. 7] A cross-sectional view of a clip according to a first embodiment of the present invention when being fitted into a fitting hole of an attached member.
[FIG. 8] A perspective view of a clip and a clip mounting seat according to a second embodiment of the present invention.
[FIG. 9] A perspective view of a state in which a clip is attached to a clip mounting seat according to a second embodiment of the present invention.
[FIG. 10] A cross-sectional view taken along line A-A in FIG. 9.
[FIG. 11] A cross-sectional view taken along line B-B in FIG. 9.
[FIG. 12] A perspective view of a clip and clip mounting seat according to a third embodiment of the present invention.
[FIG. 13] A perspective view of a clip mounted on a clip mounting seat according to a third embodiment of the present invention.
[FIG. 14] A cross-sectional view taken along line A-A in FIG. 13.
[FIG. 15] A cross-sectional view taken along line B-B in FIG. 13.
[FIG. 16] A perspective view of a clip and clip mounting seat according to a modified third embodiment of the present invention.
[FIG. 17] A perspective view of a clip mounted on a clip mounting seat according to a modified third embodiment of the present invention.
[FIG. 18] A cross-sectional view taken along line A-A in FIG. 17.
[FIG. 19] A cross-sectional view taken along line B-B in FIG. 17.

### [Detailed Description]

Hereinbelow, the structure of the clip 10 and the clip mounting seat 22 according to the embodiment of the present invention will be described with reference to the drawings.

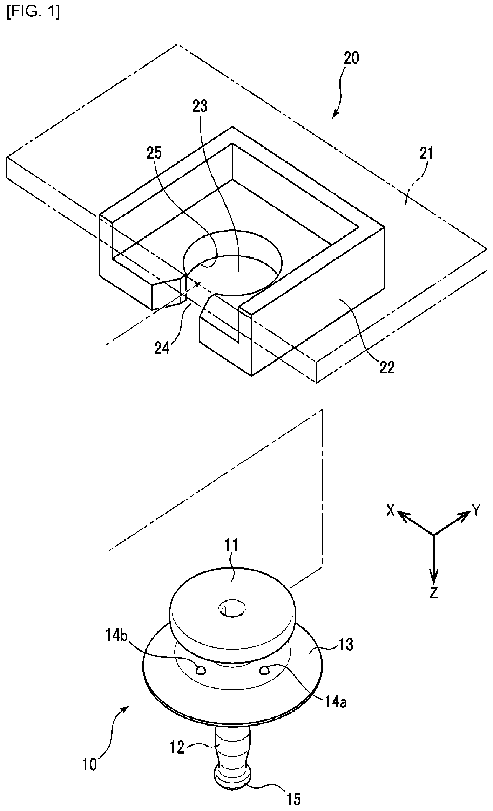

FIG. 1 shows a perspective view of a clip 10 and an attaching member 20 according to a first embodiment of the present invention. The clip 10 is made of, for example, resin. The clip 10 comprises a head unit 11, a shaft unit 12, a flange 13 and a leg unit 15. The head unit 11 is located at one end of the shaft unit 12. The leg unit 15 is located at the other end of the shaft unit 12. The leg unit 15 comprises a protrusion that can be fitted into a fitting hole 33 of the attached member 30, which will be described later. The shape is not limited to a protrusion, and any shape that can be fitted into the fitting hole 33 of the attached member 30 may be used. The flange 13 is located between the head unit 11 and the leg unit 15 in the shaft unit 12 and is preferably closer to the head unit 11. The diameter of the flange 13 is set to be larger than the diameter of the head unit 11. The flange 13 has a substantially horizontal surface on the inner diameter side and a slope on the outer diameter side, with a boundary at a certain position in the radial direction. The flange 13 has an engagement unit 14 (14a, 14b, 14c, 14d) on the substantially horizontal surface on the inner diameter side, which is the face on the head unit 11 side. The engagement unit 14 may be a protrusion. The protrusion may be hemispherical. In the present embodiment, the engagement unit 14 has four protrusions that are approximately equally spaced when viewed in the +Z direction, but this is not limited thereto. It is preferable to provide at least three protrusions that are approximately equally spaced so that there is no restriction on the mounting direction of the clip 10 when attaching the clip 10 to the clip mounting seat 22, which will be described later.

The attaching member 20 is, for example, a door trim that is attached to a body panel of an automobile. The attaching member 20 has a base unit 21 and a clip mounting seat 22. The clip mounting seat 22 is provided on the base unit 21, and of the four sides of the clip mounting seat 22, three sides extend in the +Z direction, and the remaining side is open. The clip mounting seat 22 is provided with a surface facing the base unit 21 from the three sides. The clip mounting seat 22 comprises a mounting hole 23, an opening unit 24, and an engagement unit 25 on the surface facing the base unit 21. The mounting hole 23 is a hole with a diameter smaller than the diameters of the head unit 11 and flange 13 of the clip 10. The opening unit 24 communicates with the mounting hole 23 and also communicates with one open side of the clip mounting seat 22. In the present embodiment, the engagement unit 25 is the edge of the mounting hole 23.

As shown by the dashed arrow in FIG. 1, the shaft unit 12 between the head unit 11 and flange 13 of the clip 10 is inserted in the +Y direction into the mounting hole 23 through the opening unit 24 from one open side of the clip mounting seat 22, thereby mounting the clip 10 to the clip mounting seat 22.

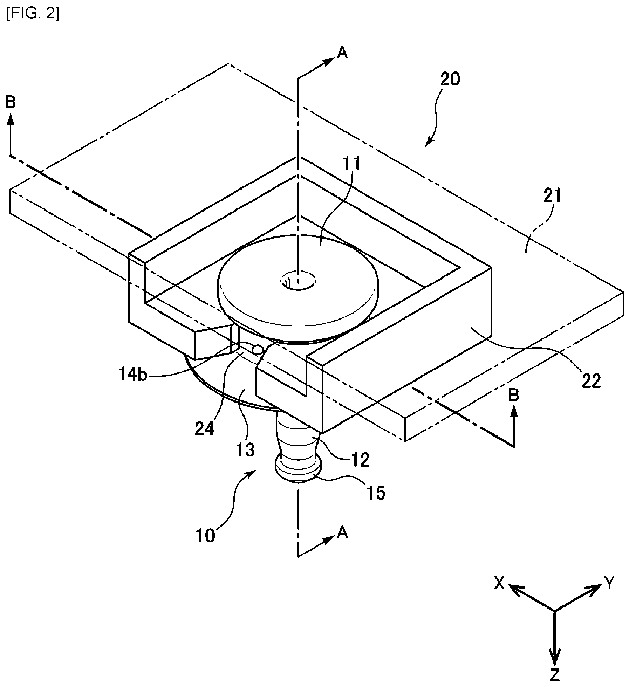

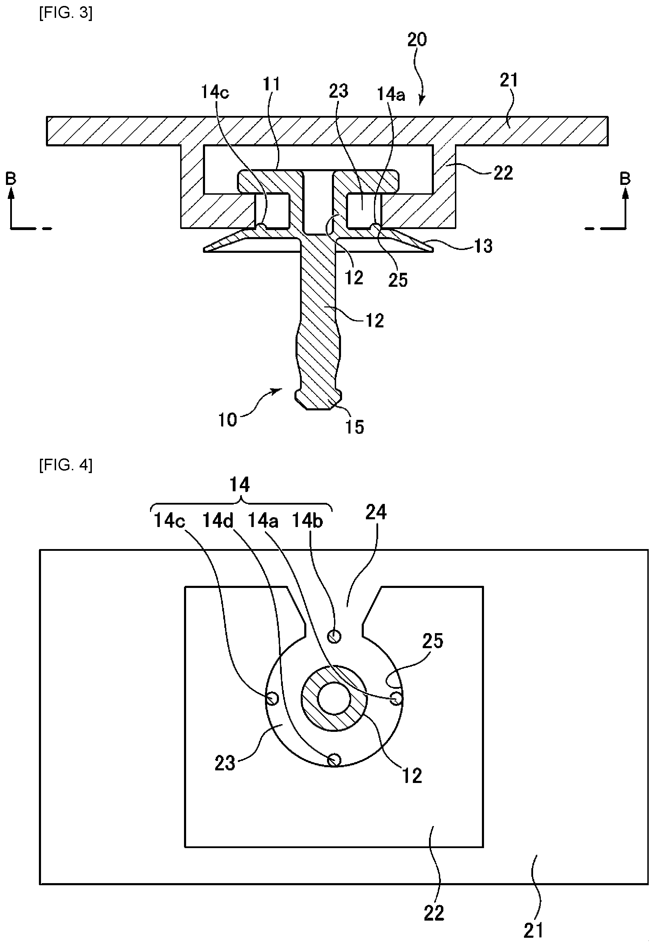

FIG. 2 shows a perspective view of the clip 10 mounted on the clip mounting seat 22 of the first embodiment of the present invention. FIG. 3 shows a cross-sectional view taken along line A-A in FIG. 2. Furthermore, FIG. 4 shows a cross-sectional view taken along line B-B in FIG. 2. As can be seen by referring to FIGS. 3 and 4, the four protrusions 14a, 14b, 14c and 14d of the engagement unit 14 are located inside the edge of the mounting hole 23, and three of them -- the protrusions 14a, 14c and 14d -- engage with the edge of the mounting hole 23, which is the engagement unit 25 of the clip mounting seat 22. By this engagement, the position of the axial center of the clip 10 is regulated to coincide with the position of the center of the mounting hole 23 on the Z axis, and by regulating the position of the axial center of the clip 10, the clip 10 is held on the clip mounting seat 22. Here, it is preferable to arrange the protrusions 14a, 14b, 14c and 14d on the flange 13 surface at approximately equal intervals, since this allows the clip 10 to be held more stably against the clip mounting seat 22. Furthermore, in order for the clip 10 to be held on the clip mounting seat 22, it is sufficient for at least two protrusions to be engaged with the edge; however, when attaching the clip 10 to the clip mounting seat 22, as shown in FIG. 4, the protrusion 14b may be located at a position where there is an opening unit 24 without an edge, and the protrusion does not have to engage with the edge. In considering such a case, if at least three protrusions are arranged at approximately equal intervals on the flange 13 surface as described above, at least two protrusions can engage with the edge of the engagement unit 25.

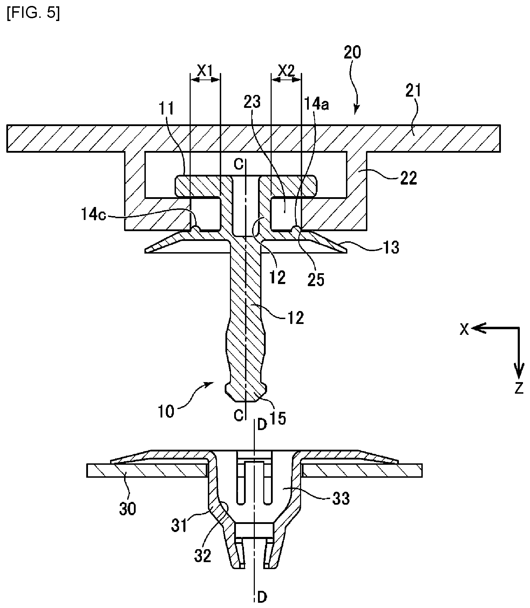

FIGS. 5 to 7 are diagrams showing the initial, intermediate and final states of the clip 10 attached to the clip mounting seat 22 of the first embodiment of the present invention, when the clip 10 is pushed in the +Z direction and the leg unit 15 is inserted and fitted into the fitting hole 33 of the attached member 30 via the leading clip 31. First, referring to FIG. 5, it can be seen that the position of the axial center of the clip 10 (line C-C) is different from the position of the axial center of the fitting hole 33 of the attached member 30 (line D-D).

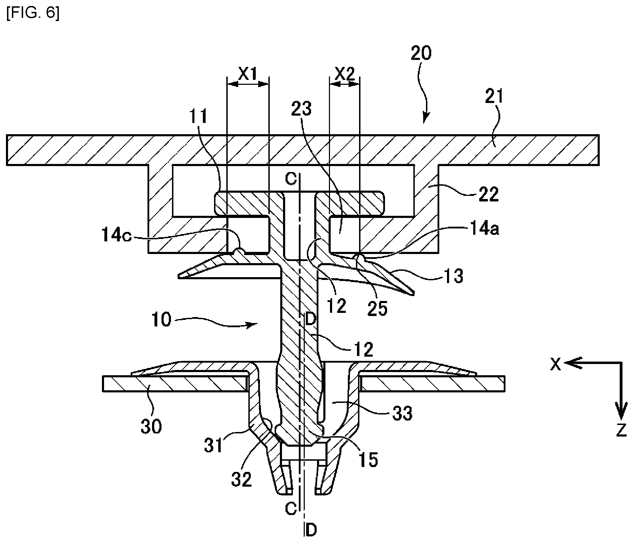

Next, FIG. 6 shows the state in which the clip 10 is further pushed in the +Z direction from the state in FIG. 5. Referring to FIG. 6, the leg unit 15 of the clip 10 is in contact with the inner surface 32 of the leading clip 31 attached to the fitting hole 33. When the clip 10 is further pushed in the +Z direction while in contact with this inner surface 32 and a load is applied, the inclined inner surface 32 of the leading clip 31 applies a load to the leg unit 15 in contact in the -X direction along the line D-D, which is the axial center of the fitting hole 33, and the leg unit 15 is guided in the -X direction. As the leg unit 15 is guided in the -X direction, a load is applied to the clip 10 in the -X direction. When a load is applied to the clip 10 in the -X direction, a load is applied between the protrusion 14a and the edge of the engagement unit 25. As can be seen from FIG. 6, the flange 13 bends in the +Z direction, the protrusion 14a overcomes the edge, and the engagement between the protrusion 14a of the engagement unit 14 on the flange 13 surface and the edge of the mounting hole 23 of the engagement unit 25 is released, and the clip 10 moves in the -X direction. Further, in FIG. 5, the width X1 and width X2 of the mounting hole 23 are the same, but as the clip 10 moves in the -X direction, the width X2 of the mounting hole 23 becomes smaller than the width X1 in FIG. 6. In addition, as the clip 10 moves in the -X direction, the difference between the lines C-C and D-D in FIG. 5 becomes smaller in FIG. 6, and it can be seen that the lines C-C and D-D approach each other. Furthermore, if the flange 13 is flexible, the engagement between the protrusion 14a, which is the engagement unit 14 on the surface of the flange 13, and the edge of the mounting hole 23, which is the engagement unit 25, is easily released. Therefore, it is preferable to set the flange 13 to be thin so that it is flexible.

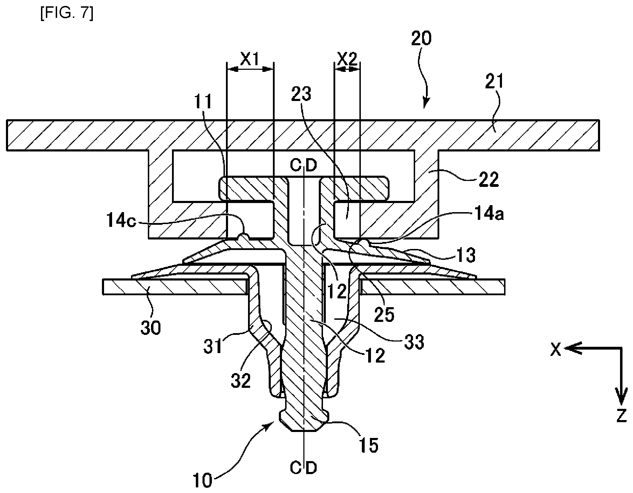

Finally, FIG. 7 shows, per the state shown in FIG. 6, a state in which the clip 10 is further pushed in the +Z direction, and the leg unit 15 is fitted into the fitting hole 33 of the attached member 30 via the leading clip 31; more specifically, it shows the state in which the leg unit 15 is fitted into the fitting hole 33 of the attached member 30 by fitting the leg unit 15 into the flexible elastic piece provided on the leading clip 31 of the attached member 30. Referring to FIG. 7, as described above, the leg unit 15, which is in contact with the inclined inner surface 32 of the leading clip 31, is further loaded in the -X direction and guided in the -X direction, and as a result, the clip 10 moves further in the -X direction, making the width X2 of the mounting hole 23 smaller than in FIG. 6. Also, in FIG. 7, in comparison with FIG. 6, it can be seen that the leg unit 15 fits into the flexible elastic piece provided on the leading clip 31 of the attached member 30, and the C-C line and the D-D line come closer together; as a result, the C-C line and the D-D line overlap.

In this way, when the position of the axial center of the clip 10 is different from the position of the axial center of the fitting hole 33, the clip 10 and the clip mounting seat 22 are configured to be disengaged, so that the attaching member 20 can be easily assembled to the attached member 30.

As described above, the case in which the position of the axial center of the clip 10 is displaced in the +X direction relative to the position of the axial center of the fitting hole 33 has been shown, but the positional displacement is not limited to the +X direction, and positional displacement in all directions on the XY plane can be corrected by disengaging the above-mentioned engagement so that the clip 10 can move. In addition, since the load is applied locally to protrusions 14a, 14b, 14c and 14d, which constitute the engagement unit 14 on the flange 13 surface, the engagement with the engagement unit 25 is released by a relatively low load. As shown in Figs. 5 to 7, the clip 10 may be fitted into the fitting hole 33 via the leading clip 31, or, for example, the clip 10 may be directly fitted into the fitting hole 33 without the leading clip 31.

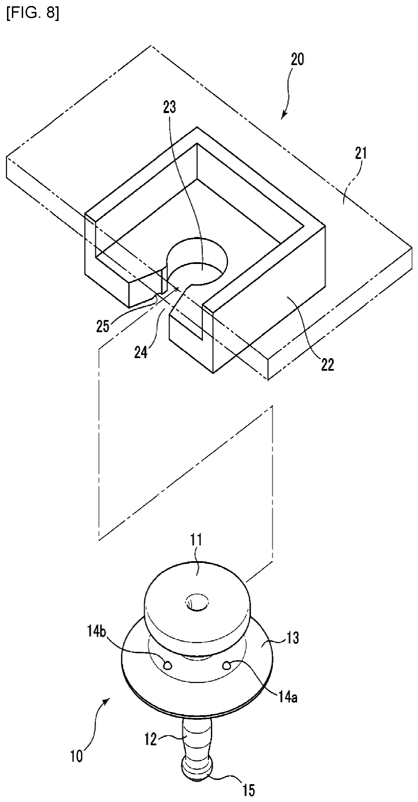

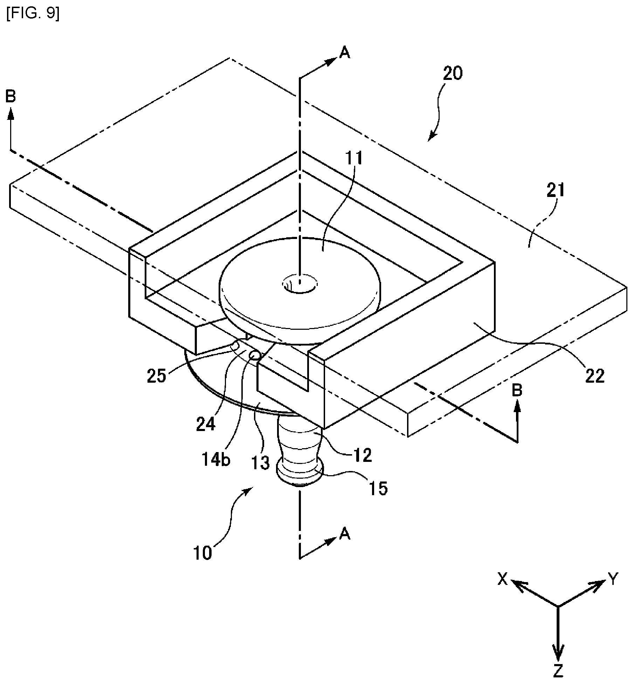

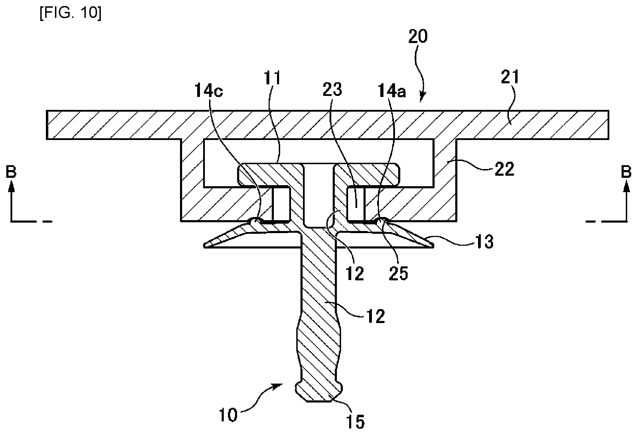

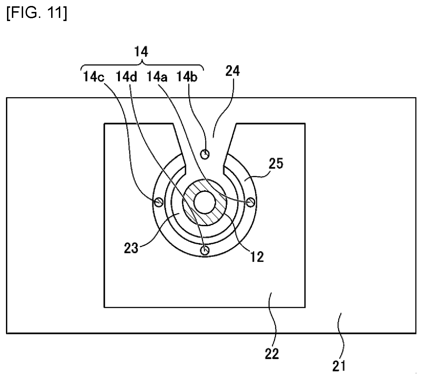

FIG. 8 shows a perspective view of the clip 10 and the attaching member 20 of the second embodiment of the present invention. FIG. 9 shows a perspective view of the clip 10 attached to the clip mounting seat 22 of the second embodiment of the present invention. Also, FIG. 10 shows a cross-sectional view taken along line A-A in FIG. 9. Furthermore, FIG. 11 shows a cross-sectional view taken along line B-B in FIG. 9. In the present embodiment, the same components as those in the first embodiment are given the same reference numerals as those in the first embodiment, and a detailed description thereof will be omitted.

The engagement unit 14 of the clip 10 of the present embodiment has four protrusions on the flange 13 surface as in the first embodiment; however, as can be seen by comparing FIG. 11 with FIG. 4, the protrusions of the present embodiment are provided on the outer diameter side of the flange 13 surface compared to the protrusions of the first embodiment. As can be seen by referring to FIGS. 10 and 11, the engagement unit 25 of the clip mounting seat 22 of the present embodiment is a groove that is concentric with the mounting hole 23 has a larger diameter than the mounting hole 23 and is provided in an arc shape. The cross-sectional shape of the groove is semicircular. Further, the cross-sectional shape of the groove is not limited thereto, and may be, for example, a semi-elliptical shape or a triangular shape. In the first embodiment, the protrusions and the edges are engaged, whereas in the present embodiment, the protrusions and the grooves are engaged, and the same effect as in the first embodiment is achieved in the present embodiment. When the clip 10 is fitted into the fitting hole 33 of the attached member 30, the depth of the groove may be set shallower than the protrusion so that the protrusion does not get stuck therein, in order to make the engagement easily releasable by the protrusion climbing over the groove.

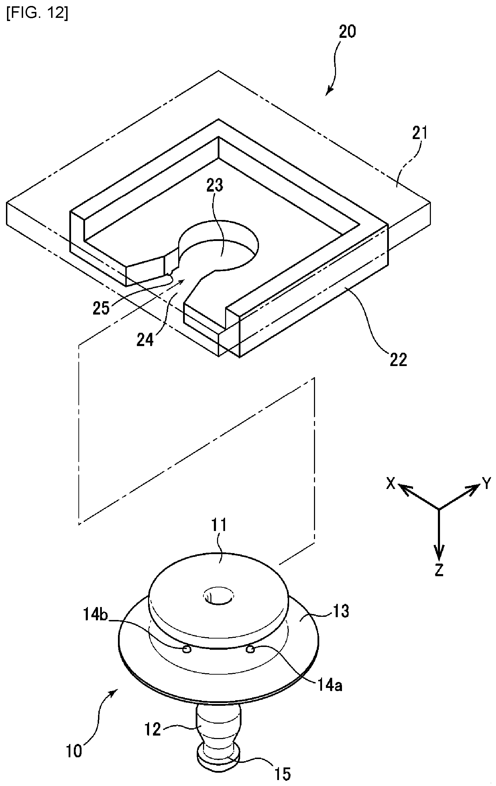

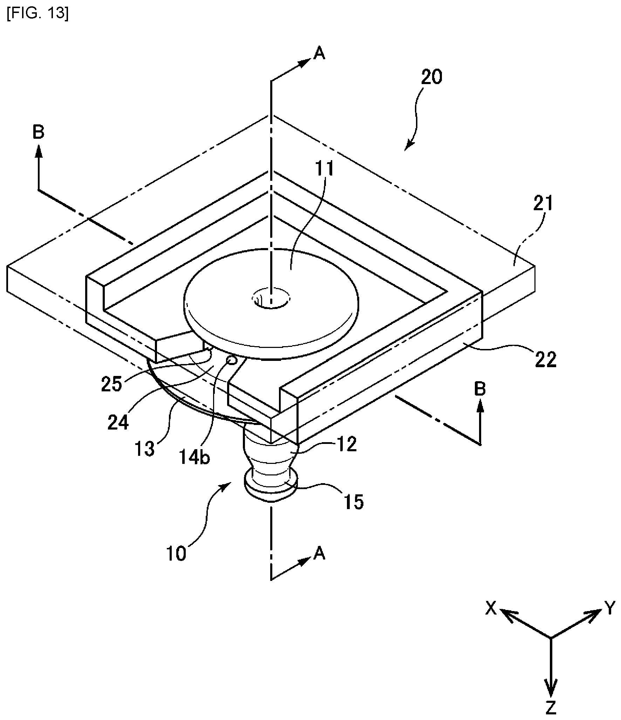

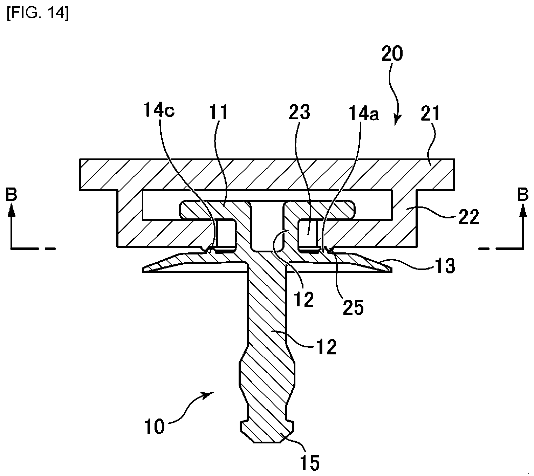

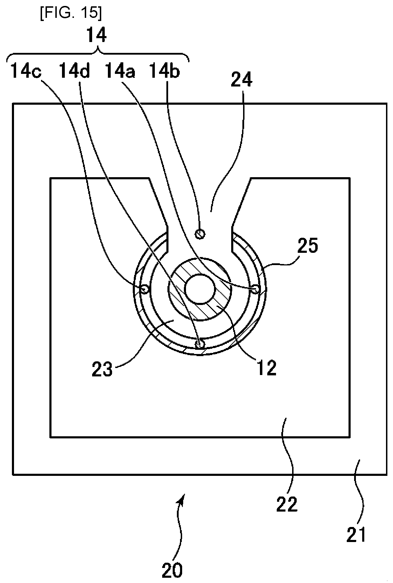

FIG. 12 shows a perspective view of the clip 10 and the attaching member 20 of a third embodiment of the present invention. FIG. 13 shows a perspective view of the clip 10 attached to the clip mounting seat 22 of the third embodiment of the present invention. Furthermore, FIG. 14 shows a cross-sectional view taken along line A-A in FIG. 13. In addition, FIG. 15 shows a cross-sectional view taken along line B-B in FIG. 13. In the present embodiment, the same components as those in the first embodiment are given the same reference numerals as those in the first embodiment, and a detailed description thereof will be omitted.

The engagement unit 14 of the clip 10 of the present embodiment has four protrusions on the flange 13 surface as in the first embodiment; however, as can be seen by comparing FIG. 15 with FIG. 4, the protrusions in the present embodiment are provided on the outer diameter side of the flange 13 surface compared to the first embodiment. As can be seen by referring to FIGS. 14 and 15, the engagement unit 25 of the clip mounting seat 22 of the present embodiment is a protrusion that is concentric with the mounting hole 23, has a larger diameter than the mounting hole 23 and is provided in an arc shape. The cross-sectional shape of the protrusion is semicircular. The cross-sectional shape of the protrusion is not limited thereto, and may be, for example, a semi-elliptical shape or a triangular shape. Regarding the arrangement of the engagement unit 14 of the clip 10 and the engagement unit 25 of the clip mounting seat 22, in the present embodiment, as can be seen by referring to FIG. 15, the arc-shaped protrusion, which is the engagement unit 25 provided on the clip mounting seat 22, is provided on the outer diameter side of the protrusions 14a, 14b, 14c and 14d, which are the engagement units 14 provided on the flange 13 surface of the clip 10, and the protrusion on the flange 13 surface of the clip 10 on the inner diameter side engages with the arc-shaped protrusion of the clip mounting seat 22 on the outer diameter side. Moreover, In the first embodiment, the protrusion and the edge are engaged, whereas in the present embodiment, the protrusions are engaged with each other; however, the present embodiment provides the same effect as the first embodiment. When the clip 10 is fitted into the fitting hole 33 of the attached member 30, the protrusion on the flange 13 surface may be set shallower than the protrusion on the clip mounting seat 22 surface so that the engagement can be easily released by the protrusion on the flange 13 surface.

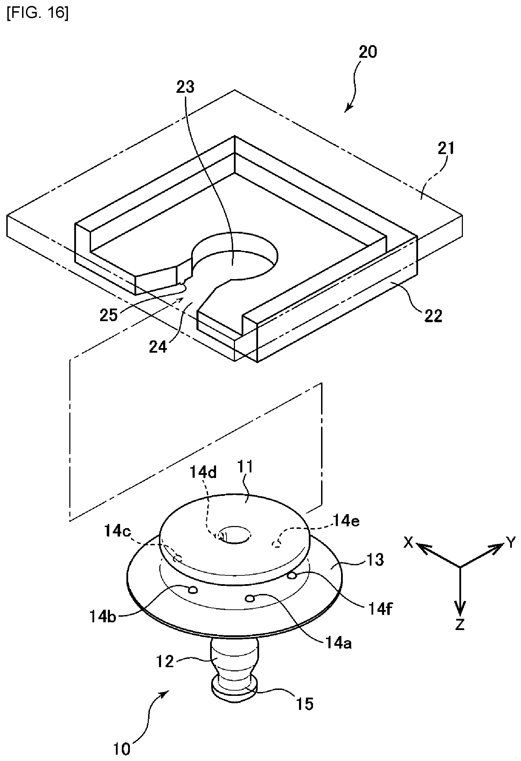

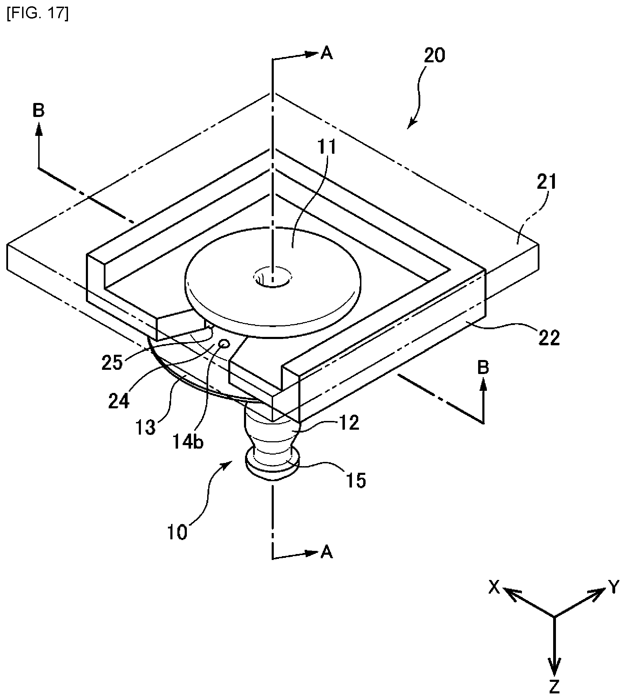

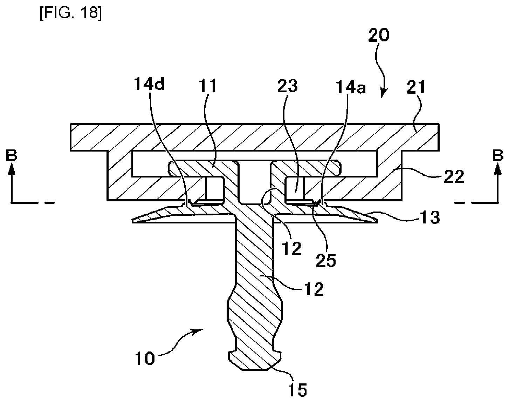

FIG. 16 shows a perspective view of the clip 10 and the attaching member 20 according to a modification of the third embodiment of the present invention. FIG. 17 shows a perspective view of the clip 10 attached to the clip mounting seat 22 according to a modification of the third embodiment of the present invention. Furthermore, FIG. 18 shows a cross-sectional view taken along line A-A in FIG. 17. Additionally, FIG. 18 shows a cross-sectional view taken along line B-B in FIG. 17. In this modification, the same components as those in the first embodiment are given the same reference numerals as those in the first embodiment, and a detailed description thereof will be omitted.

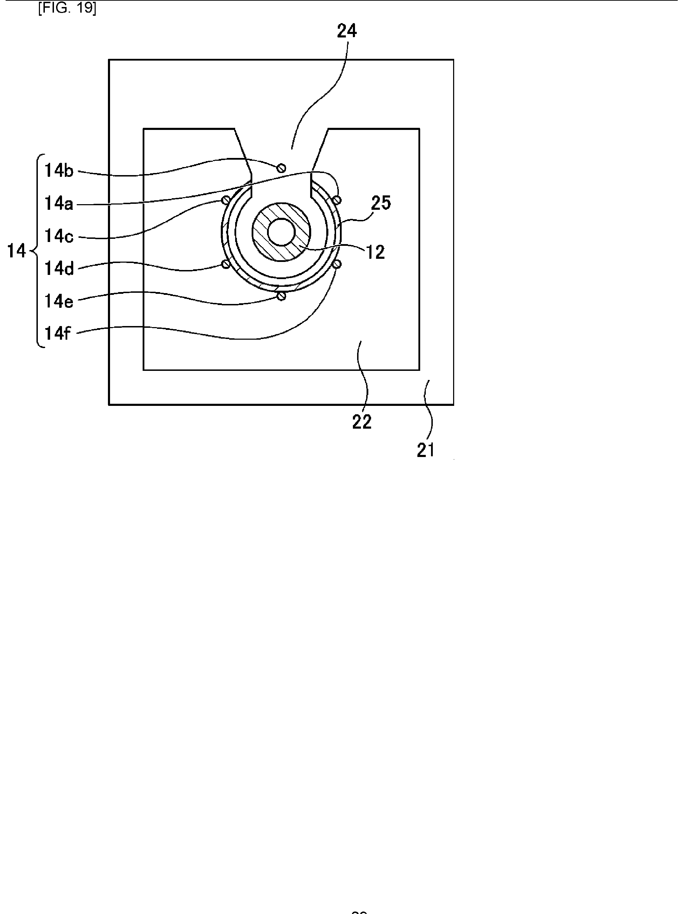

The engagement unit 14 of the clip 10 of this modification has four protrusions on the flange 13 surface as in the third embodiment; however, as can be seen by comparing FIG. 19 with FIG. 15, the protrusions on the flange 13 surface of this modification are provided on the outer diameter side of the flange 13 surface compared to the third embodiment. Also, as can be seen by comparing FIG. 19 with FIG. 15, while four protrusions (14a, 14b, 14c, 14d) are provided in the third embodiment, six protrusions (14a, 14b, 14c, 14d, 14e, 14f) are provided in this modification. As can be seen by referring to FIGS. 18 and 19, the engagement unit 25 of the clip mounting seat 22 of this modification is a protrusion that is concentric with the mounting hole 23, has a larger diameter than the mounting hole 23, and is provided in an arc shape. The cross-sectional shape of the protrusion is semicircular. The cross-sectional shape of the protrusion is not limited thereto, and may be, for example, a semi-elliptical or triangular shape. Regarding the arrangement of the engagement unit 14 of the clip 10 and the engagement unit 25 of the clip mounting seat 22, in this modified example, as can be seen from FIG. 19, unlike the third embodiment, the arc-shaped protrusion, which is the engagement unit 25 provided on the clip mounting seat 22, is provided on the inner diameter side of the protrusions 14a, 14b, 14c, 14d, 14e and 14f, which are the engagement units 14 provided on the flange 13 surface of the clip 10, and the protrusion on the flange 13 surface of the clip 10 on the outer diameter side engages with the arc-shaped protrusion on the clip mounting seat 22 on the inner diameter side.

When the clip 10 is attached to the clip mounting seat 22, the protrusion 14 on the flange 13 surface of the clip 10 is engaged with the engagement unit 25 of the clip mounting seat 22 as described above. At this time, due to the difference in the arrangement of the protrusion 14 of the clip 10 and the engagement unit 25 of the clip mounting seat 22 as described above between this modified example and the third embodiment, this modified example may be superior to the third embodiment. That is, when the clip 10 is attached to the clip mounting seat 22, in the third embodiment, in order to engage the protrusion 14 of the clip 10 with the protrusion that is the engagement unit 25 of the clip mounting seat 22, the protrusion 14 must overcome the engagement unit 25 in at least 3 locations. In contrast, in this modified example, referring to FIG. 19, for example, when the clip 10 is inserted into the clip mounting seat 22 in a 45° direction (downward and to the left, as viewed from the paper) toward the +Y direction (downward and to the left, as viewed from the paper) with respect to the +X direction (leftward, as viewed from the paper), in order to engage the protrusion 14 of the clip 10 with the protrusion that is the engagement unit 25 of the clip mounting seat 22, there are only two locations where the protrusion 14 of the clip 10 must overcome the protrusion that is the engagement unit 25. Therefore, this modified example is superior to the third embodiment in that the number of protrusions 14 of the clip 10 that need to overcome the engagement unit 25 of the clip mounting seat 22 may be reduced.

In the first embodiment, the protrusion and the edge are engaged, whereas in this modified example, the protrusions are engaged with each other, and this modified example provides the same effect as the first embodiment. When the clip 10 is fitted into the fitting hole 33 of the attached member 30, the protrusion on the flange 13 surface may be made shallower than the protrusion on the clip mounting seat 22 surface so that the engagement can be easily released.

In addition, as a further modified example, the engagement unit 25 on the clip mounting seat 22 may be provided with a circular arc-shaped protrusion on the inner diameter side and the outer diameter side of the protrusion 14 on the flange 13 surface of the clip 10, so that the protrusion on the flange 13 surface of the clip 10 engages with the circular arc-shaped protrusion on the inner diameter side and the outer diameter side of the clip mounting seat 22.

The first to third embodiments of the present invention have been described above with reference to the drawings; however, the structure of the clip and clip mounting seat is not limited to the specific structure described and can be modified as appropriate, as long as the clip and clip mounting seat are configured to disengage when the position of the axial center of the clip is different from the position of the axial center of the fitting hole.

In addition, the present invention has been described using the first to third embodiments; however, the application of the present invention is not limited to application to, for example, vehicle body panels, but can be applied to various panels and can be applied as appropriate within the scope of the technical concept of the invention.

### [Explanation of Reference Numerals]

- 10: Clip
- 11: Head unit
- 12: Shaft unit
- 13: Flange
- 14: Engagement unit (protrusions 14a, 14b, 14c, 14d, 14e, 14f)
- 15: Leg unit
- 20: Attaching member
- 21: Base unit
- 22: Clip mounting seat
- 23: Mounting hole
- 24: Opening unit
- 25: Engagement unit
- 30: Attached member
- 31: Lead clip
- 32: Inner surface
- 33: Fitting hole

## Claims

1. A clip holding structure on a clip mounting seat provided on an attaching member, comprising:
wherein the clip comprises a head unit on one end side of a shaft unit, a leg unit on the other end side of the shaft unit and a flange between the head unit and the leg unit of the shaft unit;
wherein the flange comprises an engagement unit on the face of the head unit side;
the clip mounting seat comprises an engagement unit; a mounting hole having a diameter smaller than the diameters of the head unit and the flange; and an opening unit that communicates with the mounting hole, the shaft unit between the head unit and the flange being inserted radially through the opening unit into the mounting hole so that the mounting hole is located between the head unit and the flange, and the clip being attached to the clip mounting seat;
with the clip in a state in which, when the clip is attached to the clip mounting seat, the engagement unit of the clip and the engagement unit of the clip mounting seat are engaged with each other, the position of the axial center of the clip is regulated by the engagement, and the clip is attached to the clip mounting seat; when the leg unit is inserted into and fitted into the fitting hole of the attached member, if the position of the axis center of the clip is different from the position of the axis center of the fitting hole, as the leg unit is guided toward the axial center of the fitting hole,
engagement between the engagement unit of the clip and the engagement unit of the clip mounting seat are released so that the clip can move so that the position of the axial center of the clip approaches the position of the axial center of the fitting hole.

2. The structure according to claim 1, wherein the engagement unit of the clip mounting seat is an edge of the mounting hole, and wherein the engagement unit of the clip is a protrusion.

3. The structure according to claim 1, wherein the engagement unit of the clip mounting seat is a groove, and wherein the engagement unit of the clip is a protrusion.

4. The structure according to claim 1, wherein the engagement unit of the clip mounting seat is a protrusion, and wherein the engagement unit of the clip is a protrusion.

5. The structure according to any one of claims 2 to 4, wherein the clip has a plurality of protrusions, and wherein at least two of the plurality of protrusions engage with the engagement unit of the clip mounting seat.
